# EUROPEAN PATENT APPLICATION

(11) **EP 1 742 495 A1**
(43) Date of publication of application: **10.01.2007**
(21) Application number: 05256414.3
(22) Date of filing: 14.10.2005
(51) Int. Cl.: H04Q 7/30, H04L 12/28

(54) **Radio communication system, distributor, and remote radio base station for expanding radio coverage**

(30) Priority: 07.07.2005 JP 2005198663
(71) Applicant: FUJITSU LIMITED, Kawasaki-shi, Kanagawa 211-8588 (JP)
(72) Inventor: Yokosawa, Tadanori, Fujitsu Limited, Kawasaki-shi Kanagawa 211-8588 (JP); Maruyama, Satoshi, Fujitsu Limited, Kawasaki-shi Kanagawa 211-8588 (JP); Minowa, Morihiko, Fujitsu Limited, Kawasaki-shi Kanagawa 211-8588 (JP); Kume, Tomiyuki, Fujitsu Limited, Kawasaki-shi Kanagawa 211-8588 (JP)
(74) Representative: Fenlon, Christine Lesley

(57) **Abstract**

In the present system, a distributor (3) includes: distributing means (3-4) which distributes downlink communication data, received from a radio base station (2) through an optical transmission path (23), to a plurality of remote radio base station apparatuses (4); and combining means (3-9) which combines uplink communication data received from said remote radio base station apparatuses (4) through the wire transmission path (34) and transmits the combined communication data to said radio base station (2) through said optical transmitting path (23), and a remote radio base station apparatus (4) includes: transmitting means (4-3) which transmits the downlink communication data, received through said wire transmission path (34), by radio; and receiving means (4-8) which transmits uplink data, received by radio, to said relay apparatus (3) through said wire transmission path (34). The present system makes radio wave blind areas, such as rooms in buildings of apartments or hotels, included in a radio communication service area efficiently at low cost, without increasing space noise.

## Description

### Cross reference to related applications

This application is based on and hereby claims priority to Japanese Application No. 2005-198663 filed on July 7, 2005 in Japan, the contents of which are hereby incorporated by reference.

### BACKGROUND OF THE INVENTION

### (1) Field of the Invention:

The present invention relates to a radio communication system, a relay apparatus, and a remote radio base station apparatus. The invention relates particularly to an art suitable for use in making indoor radio wave blind areas, such as rooms in apartments and hotels, included in a radio service area, thereby complementing the radio service area.

In current mobile radio communication systems, such as mobile phones, outdoor service areas have been expanded. However, there are needs for expanding service areas in indoor areas, such as underground shopping areas, underground parking areas, office buildings, hotels, apartments, and department stores, which are radio wave blind area where it is difficult for radio waves to pass through.

As a countermeasure, there are systems in which radio base stations are installed in underground areas or buildings, or in which simple base stations (relay apparatuses) are provided, one for each floor of a building (for example, see the following non-patent document 1) . FIG. 8 shows an example. In FIG. 8, a base station (BTS: Base Transceiver Station) 110 is installed underground beneath the building 100. With this base station 110 as a start point, relay apparatuses 120, 130, 140, and 150 are installed in radio wave blind areas, such as outside of the building 100, between the adjacent buildings 200 and 300, in an underground shopping area, and inside the building 300, via an optical cable 400. Further, in the building 300, with the relay apparatus 150 as a base point, small-sized relay apparatuses 151 are installed, one on each floor of the building 300.

Here, the above relay apparatuses 120, 130, 140, and 150 correspond to sector functions, which originally belong to the base station 110, and separated and connected by optical cables 400. That is, the base station 110 has a radio communication function, such as a transceiving antenna and an amplifier, for each sector to be covered as a service area. The radio communication function of some sectors are separated as functions of the relay apparatuses (called "optical advanced-type based station" in the following non-patent document 1) 120, 130, 140, 150, and installed in remote places. For example, assuming that the base station (main apparatus) 110 is capable of processing thousands channels with four carriers and six sectors, and that functions are separated by one carrier one sector unit, each of the relay unit 120, 130, 140, 150, is capable of processing hundreds channels.

With this system, the rooftop of the building 100, a space between the building 200 and 300, the underground area, and each floor of the building 300 are covered as service areas by the above relay apparatus 120, 130, 140, 150, and 151, and radio terminals such as mobile phones are usable in those areas. Note that as previous technology the following patent documents 1 through 3 disclose their own technology.
[Patent Document 1] Japanese Patent Application Laid-open No. HEI 9-321688
[Patent Document 2] Japanese Patent Application Laid-open No. 2002-238071
[Patent Document 3] Japanese Patent Application Laid-open No. HEI 9-153905

[Non-Patent Document] NTT docomo. Inc., "Development of an apparatus for 1.7GHz-supporting FOMA service base station and a mobile phone terminal for estimation", [online], June 14, 2005, the Internet <URL: http://www.nttdocomo.co.jp/new/contents/05/whatnew061 4.html>

However, in the above system, in particular, in the system for covering each floor of the building 300, the optical cable 400 should be installed in the building 300 for the relay apparatus 150. In addition, in the building 300, the optical cables 500 need to be laid to each small-sized relay apparatus 151 on each floor, so that construction cost and construction period are required, thereby increasing the cost of the system. Recently, there are new buildings in which optical cables are initially installed, but in old buildings such as buildings housing a number of independent business concerns, it is extremely difficult to newly install an optical cable.

Further, the above indoor system is a system for covering wide radio wave blind areas such as each floor of office buildings and department stores, and the system is not for covering narrow spaces (closed spaces) such as each room of an apartment or a hotel. Although it is called a "small-sized" relay apparatus 151, the apparatus is still capable of processing tens to hundreds channels, and thus it is extremely inefficient to install the relay apparatus 151 in each room of an apartment or a hotel, and the cost is not commensurate.

Therefore, in narrow spaces (closed spaces) such as rooms in apartments and hotels, simple radio relay apparatuses called boosters are sometimes installed. However, illegal boosters tends to increase space noise due to radio wave interference in space and causes the problem that mobile telephones cannot be used in original service areas.

### SUMMARY OF THE INVENTION

Accordingly, it is desirable to make indoor radio wave blind areas, such as rooms of apartments and hotels, included in a service area, without increasing space noise, so as to make such indoor areas included in a service area efficiently at low cost. According to an embodiment of the present invention, the following radio communication system, relay apparatus, remote radio base station apparatus are provided.
(1) As a generic feature, the radio communication system comprises: a relay apparatus connected to a radio base station through an optical transmitting path; and a plurality of remote radio base station apparatuses connected to the relay apparatus through wire transmission paths, each of the plurality of remote radio base station apparatuses forming a radio service area. The relay apparatus includes: distributing means which distributes downlink communication data, received from the radio base station through the optical transmission path, to the plurality of remote radio base station apparatuses; and combining means which combines uplink communication data received from the remote radio base station apparatuses through the wire transmission path and transmits the combined communication data to the radio base station through the optical transmitting path. Each of the plurality of remote radio base station apparatuses includes: transmitting means which transmits the downlink communication data, received through the wire transmission path, by radio; and receiving means which transmits uplink data, received by radio, to the relay apparatus through the wire transmission path.
(2) As a preferred feature, the relay apparatus is placed at a building that is away from the radio base station or in the vicinity of the building, and each of the plurality of remote radio base station apparatuses is placed in a radio wave blind space in the building.
(3) Here, the radio wave blind space can be a closed space in the building.
(4) Further, the closed space can be a room in the building such as collective housing, a hotel, and an office building.
(5) As another preferred feature, the wire transmission path is an existing metal line in the building.
(6) As yet another preferred feature, the relay apparatus and each of the plurality of remote radio base station apparatuses include digital subscriber line communication means which transceives the uplink and the downlink communication data through the metal line by a digital subscriber line communication scheme.
(7) As a further preferred feature, the digital subscriber line communication scheme is the VDSL (Very high-bit-rate Digital Subscriber Line) communication scheme.
(8) As a still further preferred feature, the radio base station forms a plurality of sectors as the radio service area, and the distributing means and the combining means of the relay apparatus process the uplink and the downlink communication data of the channels used in one of the plurality of sectors, and the transmitting means and the receiving means of each of the plurality of remote radio base station apparatuses process the uplink and the downlink communication data of a group of channels, which channel group is obtained by dividing channels of one of the plurality of sectors.
(9) As a generic feature, there is provided a relay apparatus which is connected to a radio basic station through an optical transmission path and is connected to a plurality of remote radio basic station apparatuses through wire transmission paths, the relay apparatus comprising: distributingmeans which distributes downlink communication data, received from the radio base station through the optical transmission path, to the plurality of remote radio base station apparatuses; and combining means which combines uplink communication data received from the remote radio base station apparatuses through the wire transmission path and transmits the combined communication data to the radio base station through the optical transmitting path.
(10) As another generic feature, there is provided a remote radio base station apparatus, connected to a relay apparatus which is connected to a radio base station through an optical transmitting path, for forming a radio service area, the remote radio base station apparatus comprising: transmitting means which transmits the downlink communication data, received through the wire transmission path, by radio; and receiving means which transmits uplink data, received by radio, to the relay apparatus through the wire transmission path.

According to an embodiment of the present invention, it is possible to make indoor radio wave blind areas, such as rooms of buildings exemplified by collective housing (apartments, etc.) and hotels included in a service area. It is thus possible to make indoor space included in a service area efficiently at low cost. In particular, if existing metal lines installed in indoor spaces are used in communication between relay apparatuses and remote radio base stations, it is possible to make the above radio wave blind areas included in a radio service area at lower cost.

Other features of embodiments of the present invention will be apparent from the following detailed description when read in conjunction with the accompanying drawings.

### BRIEF DESCRIPTION OF THE DRAWINGS

FIG. 1 is a block diagram showing a construction of a radio communication system according to one preferred embodiment of the present invention;
FIG. 2 is a block diagram showing a construction of a radio communication system according to one preferred embodiment of the present invention;
FIG. 3 is a block diagram showing a construction of an important part of a distributor of FIG. 1 and FIG. 2;
FIG. 4 is a block diagram showing a construction of an important part of a small-sized base station of FIG. 1 and FIG. 2;
FIG. 5 is a block diagram showing a construction of an important part of a radio base station of FIG. 1;
FIG. 6 is a diagram showing changes in a downstream signal format in a distributor of FIG. 1 and FIG. 2;
FIG. 7 is a diagram showing changes in an upstream signal format in a distributor of FIG. 1 and FIG. 2; and

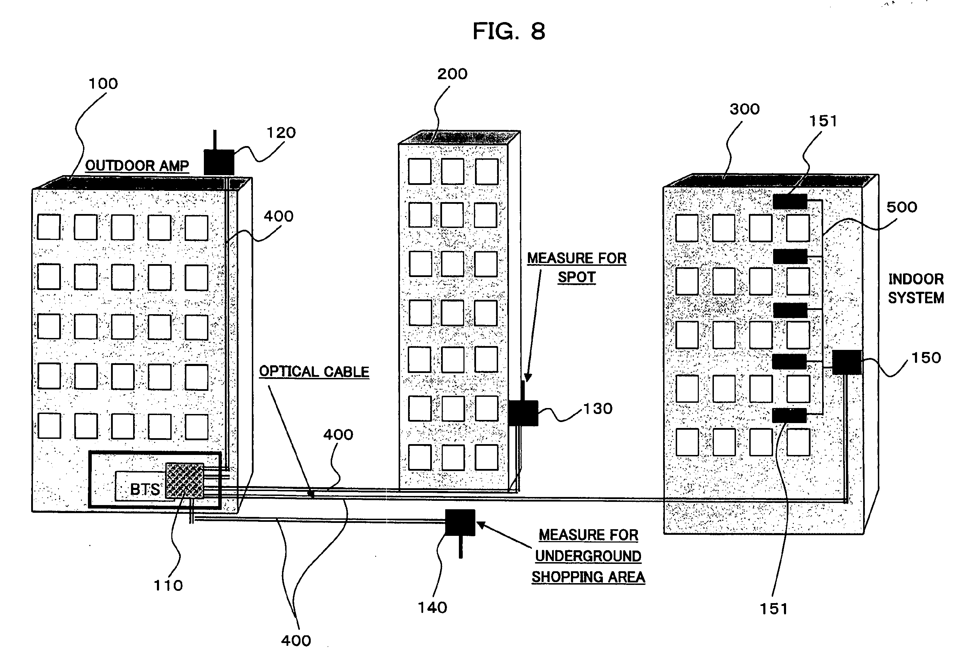

FIG. 8 is a block diagram showing an example of a construction of a previous radio communication system.

### DESCRIPTION OF THE PREFERRED EMBODIMENT(S)

### (A) One Preferred Embodiment:

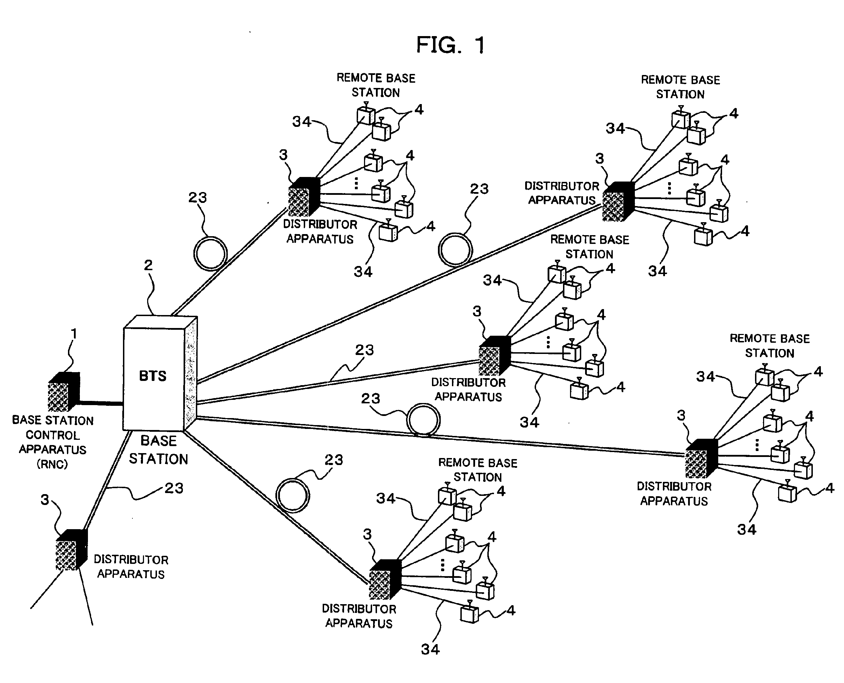

FIG. 1 is a block diagram showing a construction of a radio communication system according to one preferred embodiment of the present invention. The radio communication system of FIG. 1 includes: a base station control apparatus (RNC: Radio Network Controller) 1; a radio base station (BTS: Base Transceiver Station) 2; distributor apparatuses 3 each of which serves as a relay apparatus connected to the radio base station 2 through an optical transmitting path (optical fiber) 23; and N-number (N is an integer two or greater; for example, *N*=64), at the maximum, of remote radio based stations (small-sized base stations) 4 connected to each relay apparatus 3 through wire transmission paths 34.

Here, the base station control apparatus 1 accommodates more than one radio base station 2 and communicates with the radio base stations 2, whereby communication data from a public communication network (not illustrated) is delivered to the radio base station 2, and communication data from the radio base station 2 is transmitted to the public communication network. In addition, the base station control apparatus 1 performs necessary monitoring control (transceiving of monitoring control signals) on the radio base station 2. As described above, the radio base station 2 has a transceiving antenna, a frequency converter (up-converter and down-converter), and an amplifier, as a radio communication function (sector function) for each sector, which forms a radio service area. A part of or all of the sector functions (for five sectors in FIG. 1) are separated as functions of distributor apparatuses 3 and small-sized base stations 4, and installed at remote places via optical fibers 23.

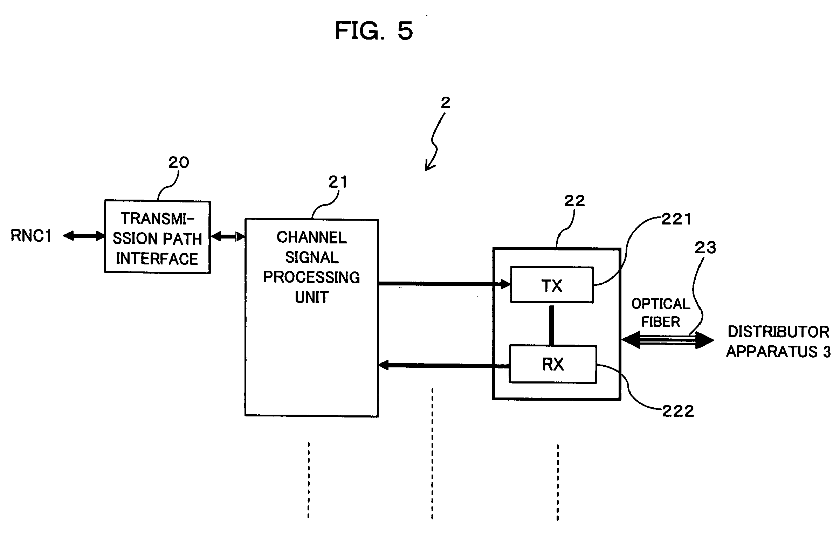

FIG. 5 shows a construction of an important part of the radio base station 2. As shown in FIG. 5, the radio base station 2 includes: a transmission path interface 20, which interfaces with the base station control apparatus 1; a channel signal processing unit 21, which performs channel-based signal processing of communication data transceived between the base station control apparatus 1 and the distributor apparatus 3, for each sector; an optical interface 22 having a necessary transmitter function (TX) 221 and a receiver function (RX) 222 containing an optical-electrical conversion and electrical-optical conversion, which optical interface 22 interfaces with the distributor apparatus 3, for each sector. Each channel signal, which has undergone signal processing by the channel signal processing unit 21, is transmitted to a distributor apparatus 3 through the optical fiber 23 by means of the transmitter function 221 of the optical interface 22. Channel signals received through the optical fiber 23 by means of the receiver function 222 of the optical fiber 23 is input to the channel signal processing unit 21. Here, between the radio base station 2 and each distributor apparatus 3, optical communication at a bit rate of several hundreds Mbps is available.

Each distributor apparatus 3 separates and has functions for e.g., a single sector out of the sectors formed by the radio base station 2 as a radio service area. The distributor apparatus 3 distributes (broadcasts/demultiplexes) a signal (downlink communication data), received from the radio base station 2 through the optical fiber 23, to each small-sized base station 4, and also combines (multiplexes) signals (upstream communication data) from each small-sized base station 4 to transmit the combined signals to the radio base station 2 through the optical fiber 23. In this example, the distributor apparatus 3 is capable of processing upstream and downstream communication data of the channels of the above-mentioned single sector.

Each small-sized base station 4 separates and has a sector function (radio communication function) which is capable of processing channels (e.g., one to several channels) which are obtained by further dividing the channel capacity (the number of channels) for each sector function of the sectors that are formed by the radio base station 2 as a radio service area. The small-sized base station 4 transmits downlink signals, distributed (broadcasted) through the wire transmission path 34, by radio, and also transmits uplink signals, received from mobile stations such as mobile phones (not illustrated) by radio, to the distributor apparatus 3 through the wire transmission path 34. The small-sized base station 4 is capable of processing uplink and downlink communication data for the above-mentioned divided channels.

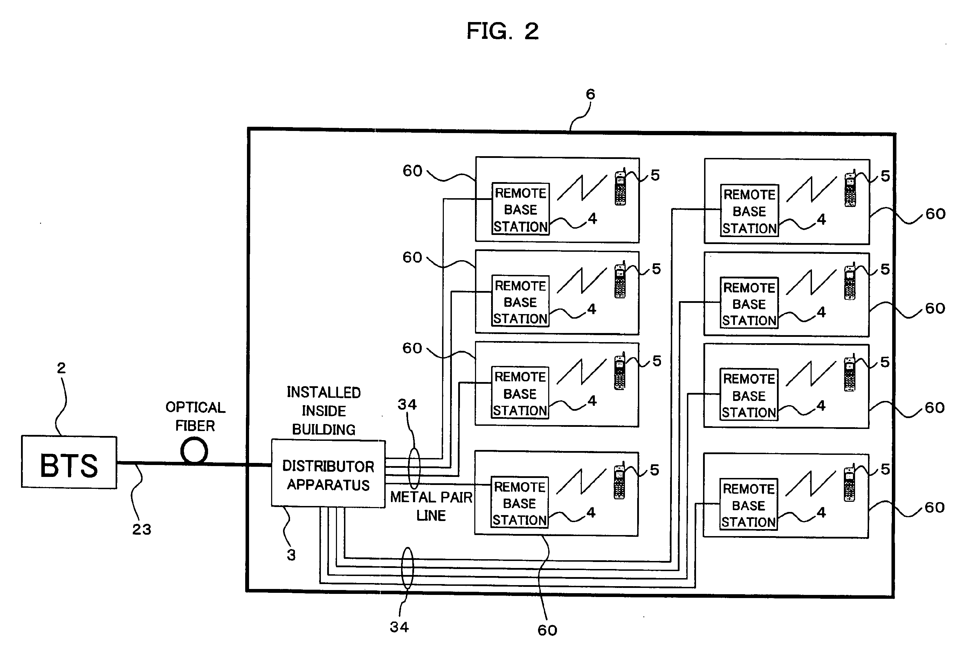

Here, the wire transmission path 34 connecting each distributor apparatus 3 and each small-sized base station 4 can be a metal line such as a telephone line and an electric power line which transmits electric signals or can alternatively be an optical line (optical fiber) which transmits optical signals. In an embodiment of the present system, a metal line, in particular, an existing telephone line in a building is used. More specifically, as shown in FIG. 2, a distributor apparatus 3 is installed in a building 6, such as an office building or a hotel, which is apart from the radio base station 2, through an optical fiber 23. Small-sized base stations 4 are installed, one in each room (closed space) 60 which is a radio wave blind space that is expected to be contained in a service area. In such a case, existing metal lines (metal pair lines) such as telephone lines and electric power lines are utilized as the wire transmission path 34. In this case, by using a digital subscriber line communication scheme (will be described later), communication at a bit rate of several tens Mbps is available between the distributor apparatus 3 and the small-sized base stations 4. The above rooms 60 include not only rooms and shops on aboveground floors but also rooms and shops on underground floors.

With this arrangement, it is possible to use the metal lines 34, which are normally installed in old buildings in which optical fibers are not installed, in installing small-sized base stations 4 in rooms 60 of a building 6, so that each room 60 in the building 6 is included in a radio service area of mobile stations (radio terminals) 5 such as mobile phones.

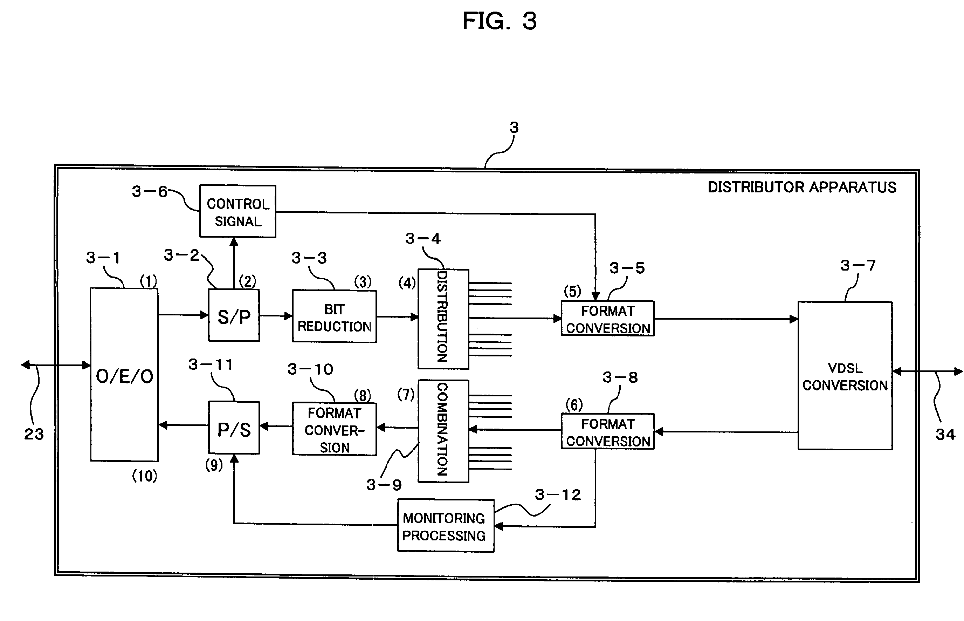

Hence, as shown in FIG. 3, the distributor apparatus 3 of the present example has a downlink signal processing system (transmitter system) including an optical-electrical-optical (O/E/O) converter 3-1, a serial-parallel (S/P) converter 3-2, a bit reduction processing unit 3-3, a distributor apparatus 3-4, a format converter 3-5, a control signal extracting unit 3-6, and a VDSL (Very high-bit-rate Digital Subscriber Line) converter 3-7. On the other hand, the distributor apparatus 3 has an uplink signal processing system (receiver system) including a VDSL converter 3-7, a format converter 3-8, a combiner 3-9, a format converter 3-10, parallel-serial (P/S) converter 3-11, a monitoring processing unit 3-12, and an optical-electrical-optical converter 3-1. Note that the optical-electrical-optical converter 3-1 and the VDSL converter 3-7 are common to the transmitter and the receiver systems.

Here, the optical-electrical-optical converter 3-1 converts a downstream optical signal, received from the radio base station 2 through the optical fiber 23, into an electric signal, and also converts an upstream electric signal from the P/S converter 3-11 into an optical signal, and transmits the optical signal to the radio base station 2 through the optical fiber 23. The S/P converter 3-2 performs S/P conversion of a downstream electric signal from the optical-electrical-optical converter 3-1.

The bit reduction processing unit 3-3 adjusts (reduces) the number of bits of the downstream electric signal after S/P conversion for a format conversion which is to be performed by the format converter 3-5 at a later stage; the distributor (distributing means) 3-4 distributes (copies) the downstream electric signal (that is, downstream communication data received from the radio base station 2 through the optical fiber 23) to each of the small-sized base stations 4.

The format converters 3-5 are provided, one for each of the downstream electric signals distributed by the distributor 3-4 (that is, the number of the format converters 3-5 is equal to the number of the small-sized base stations 4), and converts [adding a header and an OAM (Operations, Administration and Maintenance) signal, etc. the electric signals into a signal format appropriate for transmission to the metal lines 34. In an embodiment of the present example, in particular, conversion into a signal format appropriate for the VDSL communication, which is one of the digital subscriber line (xDSL) communication scheme, is performed. In this instance, using the above OAM signal, it is possible to perform downloading (updating) of software from the radio base station 2 to each small-sized base station 4, and also, functions of alarm collection and notification to the radio base station 2 by each small-sized base station 4 are realized.

The control signal extracting unit 3-6 extracts an OAM signal from a downstream electric signal at S/P conversion by the S/P converter 3-2. The extracted OAM signal is added (multiplexed) as a constituent of a downstream electric signal at the time the format converter 3-5 performs format conversion, whereby the OAM signal is transferred to each small-sized base station 4.

The VDSL converter (digital subscriber line communication means) 3-7 converts the downstream electric signals, which have undergone the above format conversion, into VDSL signals and transmits the VDSL signals to the small-sized base stations 4 through metal lines 34 by the VDSL communication scheme. The VDSL converter 3-7 also has a function of converting upstream VDSL signals, received from the small-sized base stations 4, into upstream electric signals which are to be treated in the distributor apparatus 3.

The format converters 3-8 are provided, one for each of the upstream electric signals from the small-sized base stations 4. The format converter 3-8 performs format conversion of the signal format of the upstream electric signal which has undergone conversion by the VDSL converter 3-7 by processing corresponding to an inverse conversion (removal of a header and extracting an OAM signal, etc.) of the conversion by the format converter 3-5. The combiner (combining means) 3-9 combines (adds up) upstream electric signals (that is, each item of upstream communication data received from each small-sized base station 4 through the metal lines 34) obtained after format conversion by the format converter 3-8.

The format converter 3-10 converts the signal format of the upstream electric signal after the above combining into a format appropriate for optical transmission to the optical fiber 23. The P/S converter 3-11 performs P/S conversion of the upstream electric signal whose format has been converted. At the time of P/S conversion, an OAM signal from the monitoring processing unit 3-12 is added (multiplexed) and then the signal is transferred to the radio base station 2. The upstream electric signal which has undergone the P/S conversion is subjected to electro-to -optical conversion by the optical-electrical-optical converter 3-1, and the resultant optical signal is transmitted to the radio base station 2 through the optical fiber 23.

In response to the OAM signal which is extracted (separated) at format conversion by the format converter 3-8, the monitoring processing unit 3-12 performs the processing corresponding to the OAM signal (e.g., alarm collection), and outputs the OAM signal (e.g., alarm notification), which is to be multiplexed to the upstream electric signal at P/S conversion by the P/S converter 3-11 and transferred to the radio base station 2, to the P/S converter 3-11.

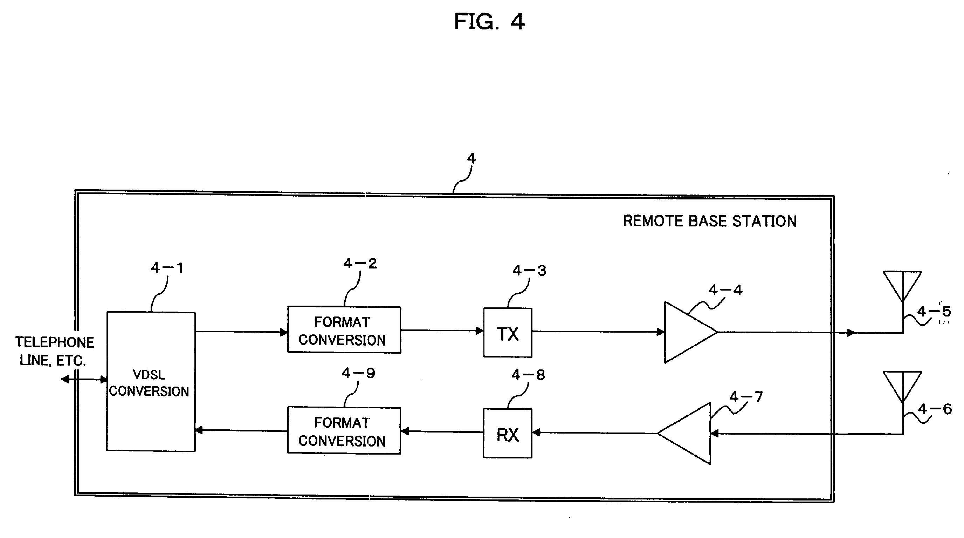

As shown in FIG. 4, each small-sized base station 4 has a downstream signal processing system (receiver system) including a VDSL converter 4-1, a format converter 4-2, a radio transmitter unit (TX) 4-3, an amplifier (4-4), and a transmitting antenna 4-5, and also has an upstream signal processing system (transmitter system) including a receiving antenna 4-6, an amplifier 4-7, a radio receiver unit 4-8, a format converter 4-9, and VDSL converter 4-1. Note that the VDSL converter 4-1 is common to the transmitter system and the receiver system.

Here, on one hand, the VDSL converter (digital subscriber line communication means) 4-1 converts the downstream VDSL signal transmitted from the distributor apparatus 3 through the metal line 34 into the original downstream electric signal. On the other hand, the VDSL converter 4-1 converts the upstream electric signal to be transmitted to the distributor apparatus 3 through the metal line 34 into an upstream VDSL signal. The format converter 4-2 converts (removal of a header, etc.) the signal format of the downstream electric signal obtained after the above-mentioned VDSL conversion into a signal format appropriate for radio transmission.

The radio transmitter unit 4-3 performs a radio transmitting processing such as modulation of the downstream electric signal, which has undergone format conversion, by a specified modulation scheme, and frequency conversion (up-conversion) of the signal into a transmission radio frequency. The amplifier (high frequency amplifier) 4-4 amplifies the downlink radio signal from the radio transmitter unit 4-3 up to a required transmission power. The radio signal after being amplified is transmitted from the transmitting antenna 4-5. That is, the above VDSL converter 4-1, format converter 4-2, radio transmitter unit 4-3, amplifier 4-4, and transmitting antenna 4-5 serve as a transmitter means, which transmits the downstream communication data, received via the metal line 34, by radio.

Further, the amplifier 4-7 amplifies the uplink radio signal, received by the receiving antenna 4-6 from a mobile station 5, up to the power necessary for receiving processing. For example, a Low Noise Amplifier (LNA) is used.

The radio receiver unit 4-8 performs receiving processing such as frequency conversion (down-conversion) of the uplink radio signal from the amplifier 4-7 into a base band signal and demodulation of the signal by the demodulation scheme correspondingtothe modulationscheme used by the transmitter end. The format converter 4-9 converts (adding a head, etc.) the upstream electric signal from the radio receiver unit 4-8 into a signal format appropriate for transmission through the metal line 34.

That is, the above receiving antenna 4-6, amplifier 4-7, radio receiver unit 4-8, format converter 4-9, and VDSL converter 4-1 serve as a receiver means which transmits uplink communication data, received by radio, to the distributor apparatus 3 via the metal line 34.

Here, the amplifiers 4-4 and 4-7 are low-power ones since areas to be covered by them are small (for example, areas in the rooms 60 of the building 6), and in some instances there is no need for such amplifiers. Further, the transmitting antenna 4-5 and receiving antenna 4-6 can be used as a common transceiving antenna via a duplexer or else.

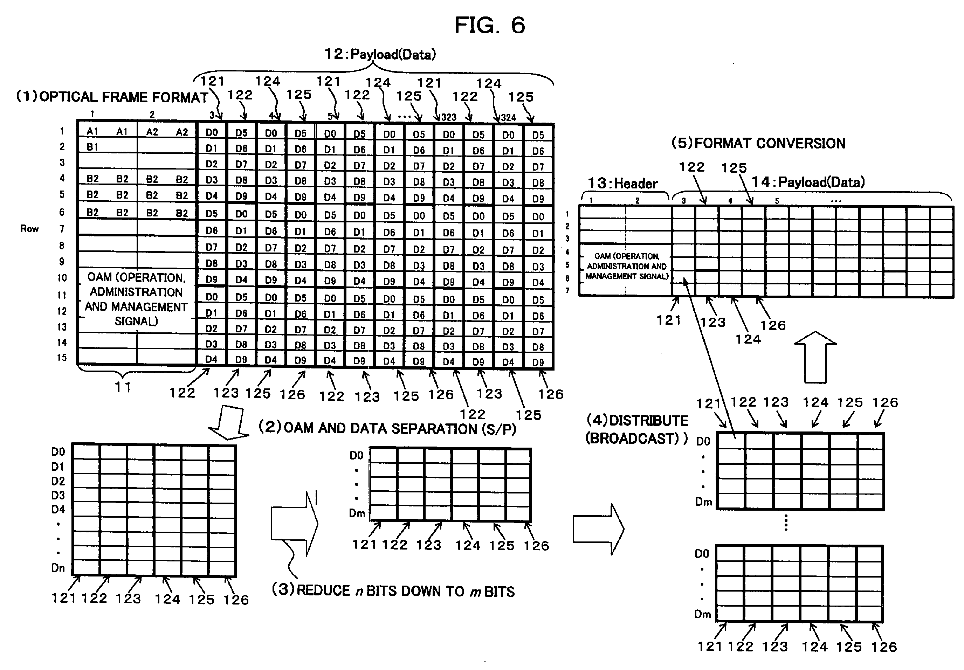

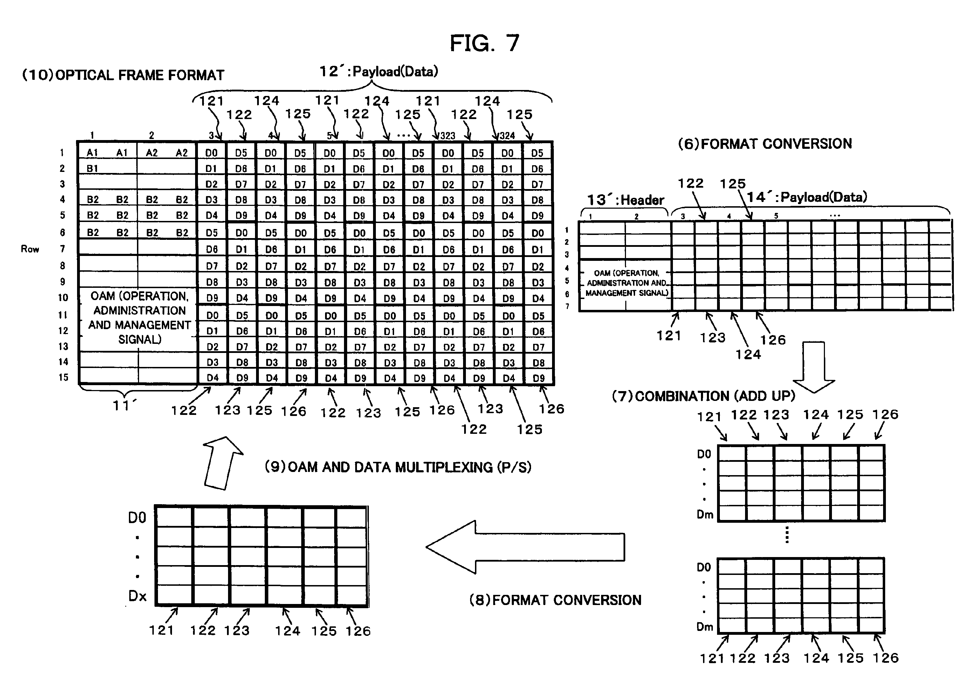

A description will be made hereinbelow of an operation of the distributor apparatus 3 and the small-sized base station 4 having the above construction. Note that FIG. 6 shows changes in a downstream signal format in the distributor apparatus 3, and FIG. 7 shows changes in an upstream signal format. (1) through (5) of FIG. 6 and (6) through (10) of FIG. 7 correspond to the signal format shown by (1) through (10) in FIG. 3.

First of all, a downstream optical signal transmitted from the radio base station 2 through the optical fiber 23isreceivedbytheoptical-electrical-opticalconverter 3-1 of the distributor apparatus 3, and is then converted into a downstream electric signal. Here, the above downstream optical signal has an optical frame format formed by a header portion 11 and a data portion (payload) 12, as shown (1) in FIG. 6. The header portion 11 stores synchronous signals (A1 and A2) and an OAM signal; the payload 12 stores a user data signal (DATA).

Here, the downstream signal converted into an electric signal by the optical-electrical-optical converter 3-1 is then subjected to S/P conversion by the S/P converter 3-2, whereby an OAM signal and a user data signal are separated as shown in (2) and (3) in FIG. 6. The OAM signal is transferred to the control signal processing unit 3-6, and the user data signal is transferred to the bit reduction processing unit 3-3. Note that data portion (D0 through D9) designated by reference characters 121 through 126 in (1) of FIG. 6 corresponds to the above separated data rows 121 through 126.

As shown in (3) of FIG. 6, the bit reduction processing unit 3-3 performs bit reduction processing on the user data signal from the S/P converter 3-2, and outputs the resultant data to the distributor 3-4. As shown in (4) of FIG. 6, the distributor 3-4 copies the bit-reduced user data signal for each small-sized base station 4 and distributes (broadcast) the data.

Each user data signal distributed by the distributor 3-4 is converted by the format converter 3-5 into a signal format, formed by the header 13 and payload 14, appropriate for transmission through a metal line, as shown in e.g., (5) of FIG. 6. That is, the above user data signal is stored as a payload portion 14, and the header portion 13 including an OAM signal from the control signal extracting unit 3-6 is added (multiplexed) to the payload 14, whereby the downstream electric signal frame is constructed.

After that, the downstream electric signal frame is converted into a downstream VDSL signal by the VDSL converter 3-7, and sent out to the metal line 34 toward the small-sized base stations 4.

Next, the downstream VDSL signal, sent out to the metal line 34, is received by the VDSL converter 4-1 of the small-sized base station 4, and the VDSL signal is converted into the original electric signal, and is then input to the format converter 4-2.

The downstream signal, input to the format converter 4-2, is converted into a signal format appropriate to a radio transmission, and is subjected to radio transmission processing, such as required modulation processing and up-conversion processing, by the radio transmitter unit 4-3. After that, the signal is amplified by the amplifier 4-4 and is then transmitted toward a mobile station 5 in a room 60 of the building 6.

On the other hand, an uplink radio signal transmitted from the mobile station 5 is received by the receiving antenna 4-6 of the small-sized base station 4, and is then amplified by the amplifier 4-7. After that, required demodulation processing and down-conversion are performed by the radio receiver unit 4-8, and the signal is then converted into a signal format appropriate for transmission through the metal line 34 by the format converter 4-9. The signal is further converted into a VDSL signal by the VDSL converter 4-1, and is then sent out to the metal line 34 toward the radio base station 2.

The VDSL signal transmitted over the metal line 34 is received by the VDSL converter 3-7 of the distributor apparatus 3, and converted into the original upstream electric signal [see (6) of FIG. 7]. After that, the signal is subjected to format conversion by the format converter 3-8, and the header portion 13' is removed, and an OAM signal and a user data signal (DATA) stored in the data portion 14' are extracted. Note that the extracted OAM signal is input to the monitoring processing unit 3-12.

As shown in (7) of FIG. 7, the extracted user data signal is combined (multiplexed) with the upstream electric signals (that is, upstream electric signal transmitted from other small-sized base stations 4) from other format converters 3-8 by the combiner 3-9, and is converted by the format converter 3-10 into a signal format appropriate for optical transmission to the optical fiber 23, as shown in (8) of FIG. 7.

Next, the upstream electric signal (user data signal) whose format has been converted is subjected to P/S conversion by the P/S converter 3-11. As shown in (9) of FIG. 7, the signal is multiplexed with an OAM signal from the optical-electrical-optical converter 3-1, and is eventually converted into the upstream optical signal having an optical frame format formed by the header portion 11' and the data portion (payload) 12', and is sent out to the optical fiber 23 toward the radio base station 2. In this case, also, data (D0 through D9) shown in (10) of FIG. 7 correspond to data rows 121 through 126 shown in (6), (7), and (8) of FIG. 7.

As described so far, according to the present embodiment, communication data is transmitted from the radio base station 2 to the distributor apparatus 3 through the optical fiber 23, and the communication data are distributed (broadcasted) from the distributor apparatus 3 to each small-sized base station 4 through the metal line 34, whereby each small-sized base station 4 placed at a remote area from the radio base station 2 is capable of forming a small-sized radio service area.

Accordingly, by installing a distributor apparatus 3 at collective housing such as an apartment, a hotel, or an office building which is remote from the radio base station 2, and by installing a small-sized base station 4 in a radio wave blind area [a closed space (interior space) suchasaroom] in the building utilizing the existing metal line 34 such as a telephone line and an electric power line, it is possible to make the radio wave blind area included in a radio service area without increasing space noise around the building and without necessity of newly installing an optical fiber for the radio wave blind area. As a result, it is possible to make the radio wave blind area included in a radio service area efficiently at low cost.

### (B) Other Modifications:

The present invention should by no means be limited to the above-illustrated embodiment, and various changes or modifications may be suggested without departing from the gist of the invention.

For example, although in the above example, small-sized base stations 4 are placed in rooms so as to make the radio blind areas in the rooms included in a service area, the small-sized base stations 4 can be installed outdoors for making outdoor radio wave blind areas included in a service area.

Further, in the above example, a digital subscriber line communication scheme, in particular, the VDSL communication scheme is used as a communication scheme in which a metal line 34 is used between the distributor apparatus 3 and each small-sized base station 4. However, various types of xDSL communication scheme such as ADSL can be applicable. If an electric power line is used as the metal line 34, communication between the distributor apparatus 3 and each small-sized base station 4 becomes PLC (Power Line Communication) . In any case, an adaptor (modem, etc,) which is necessary for realizing communication should be provided for the distributor apparatus 3 and the small-sized base station 4.

Furthermore, the above example is predicated on a case where optical fibers are not installed in the building since the building is old. However, in cases where optical fibers are installed in each room of the building, the optical fiber can be used for communication between the distributor apparatus 3 and each small-sized base station 4. In that case, also, an adaptor (optical-electrical-optical converter, etc.) should be provided for the distributor apparatus 3 and the small-sized base station 4.

As described so far, according to an embodiment of the present invention, it is possible to make radio wave blind areas such as rooms in buildings (apartments or hotels) included in a service area, without increasing space noise. It is thus possible to make indoor areas included in a service area efficiently at low cost. Thus, an embodiment of the present invention is considerably useful in the field of radio communication technology.

## Claims

1. A radio communication system, comprising:
a relay apparatus (3) connected to a radio base station (2) through an optical transmitting path (23); and
a plurality of remote radio base station apparatuses (4) connected to said relay apparatus (3) through wire transmission paths (34), each of said plurality of remote radio base station apparatuses (4) forming a radio service area,
said relay apparatus (3) including:
distributing means (3-4) which distributes downlink communication data, received from said radio base station (2) through said optical transmission path (23), to said plurality of remote radio base station apparatuses (4); and
combining means (3-9) which combines uplink communication data received from said remote radio base station apparatuses (4) through the wire transmission path (34) and transmits the combined communication data to said radio base station (2) through said optical transmitting path (23),
each of said plurality of remote radio base station apparatuses (4) including:
transmitting means (4-1, 4-2, 4-3, 4-4, and 4-5) which transmits the downlink communication data, received through said wire transmission path (34), by radio; and
receiving means (4-6, 4-7, 4-8, 4-9, and 4-1) which transmits uplink data, received by radio, to said relay apparatus (3) through said wire transmission path (34).

2. A radio communication system as set forth in claim 1,
wherein said relay apparatus (3) is placed at a building (6) that is away from said radio base station (2) or in the vicinity of the building (6),
wherein each of said plurality of remote radio base station apparatuses (4) is placed in a radio wave blind space in the building (6).

3. A radio communication system as set forth in claim 2, wherein the radio wave blind space is a closed space in the building (6).

4. A radio communication system as set forth in claim 3, wherein the closed space is a room (60) in the building such as collective housing, a hotel, and an office building.

5. A radio communication system as set forth in claim 2, wherein the wire transmission path (34) is an existing metal line in the building (6).

6. A radio communication system as set forth in claim 5, wherein said metal line is a telephone line.

7. A radio communication system as set forth in claim 5 or claim 6, wherein said relay apparatus (3) and each of the plurality of remote radio base station apparatuses (4) include digital subscriber line communication means (3-7 and 4-1) which transceives the uplink and the downlink communication data through the metal line by a digital subscriber line communication scheme.

8. A radio communication system as set forth in claim 7, wherein the digital subscriber line communication scheme is the VDSL (Very high-bit-rate Digital Subscriber Line) communication scheme.

9. A radio communication system as set forth in any one of claim 1 through claim 8,
wherein said radio base station (2) forms a plurality of sectors as the radio service area,
wherein said distributing means (3-4) and said combining means (3-9) of said relay apparatus (3) process the uplink and the downlink communication data of the channels used in one of said plurality of sectors,
wherein said transmitting means (4-1, 4-2, 4-3, 4-4, and 4-5) and said receiving means (4-6, 4-7, 4-8, 4-9, 4-1) of each of said plurality of remote radio base station apparatuses (4) process the uplink and the downlink communication data of a group of channels, which channel group is obtained by dividing channels of one of the plurality of sectors.

10. A relay apparatus which is connected to a radio basic station (2) through an optical transmission path (23) and is connected to a plurality of remote radio basic station apparatuses (4) through wire transmission paths (34), said relay apparatus comprising:
distributing means (3-4) which distributes downlink communication data, received from said radio base station (2) through said optical transmission path (23), to said plurality of remote radio base station apparatuses (4); and
combining means (3-9) which combines uplink communication data received from said remote radio base station apparatuses (4) through the wire transmission path (34) and transmits the combined communication data to said radio base station (2) through said optical transmitting path (23).

11. A relay apparatus as set forth in claim 10,
wherein said relay apparatus (3) is placed at a building (6) that is away from said radio base station (2) or in the vicinity of the building (6),
wherein each of said plurality of remote radio base station apparatuses (4) is placed in a radio wave blind space in the building (6), and
wherein the wire transmission path (34) is an existing metal line in the building (6).

12. A relay apparatus as set forth in claim 11, wherein said metal line is a telephone line.

13. A relay apparatus as set forth in claim 11 or claim 12, further comprising digital subscriber line communication means (3-7) which transceives the uplink and the downlink communication data through the metal line by a digital subscriber line communication scheme.

14. A relay apparatus as set forth in claim 13, wherein the digital subscriber line communication scheme is the VDSL (Very high-bit-rate Digital Subscriber Line) communication scheme.

15. A relay apparatus as set forth in any one of claim 10 through claim 14,
wherein said radio base station (2) forms a plurality of sectors as the radio service area,
wherein said distributing means (3-4) and said combining means (3-9) processes the uplink and the downlink communication data of the channels used in one of said plurality of sectors.

16. A remote radio base station apparatus (4), connected to a relay apparatus (3) which is connected to a radio base station (2) through an optical transmitting path (23), for forming a radio service area, said remote radio base station apparatus (4) comprising:
transmitting means (4-3) which transmits the downlink communication data, received through said wire transmission path (34), by radio; and
receiving means (4-8) which transmits uplink data, received by radio, to said relay apparatus (3) through said wire transmission path (34).

17. A remote radio base station apparatus as set forth in claim 16,
wherein said relay apparatus (3) is placed at a building (6) that is away from said radio base station (2) or in the vicinity of the building (6),
wherein each of said plurality of remote radio base station apparatuses (4) is placed in a radio wave blind space in the building (6), and
wherein the wire transmission path (34) is an existing metal line in the building.

18. A remote radio base station apparatus as set forth in claim 17, wherein said metal line is a telephone line.

19. A remote radio base station apparatus as set forth in claim 17 or claim 18 further comprising digital subscriber line communication means which transceives the uplink and the downlink communication data through the metal line by a digital subscriber line communication scheme.

20. A remote radio base station apparatus as set forth in claim 19, wherein the digital subscriber line communication scheme is the VDSL (Very high-bit-rate Digital Subscriber Line) communication scheme.

21. A remote radio base station apparatus as set forth in any one of claim 16 through claim 20,
wherein said radio base station forms a plurality of sectors as the radio service area,
wherein said transmitting means and said receiving means process the uplink and the downlink communication data of a group of channels, which channel group is obtained by dividing channels of one of the plurality of sectors.
